# DEMANDE DE BREVET EUROPEEN

(11) **EP 1 760 594 A1**
(43) Date de publication de la demande: **07.03.2007**
(21) Numéro de dépôt: 06119283.7
(22) Date de dépôt: 22.08.2006
(51) Int. Cl.: G06F 12/08

(54) **Mémoire cache, de type simple port associative par ensemble.**

(30) Priorité: 22.08.2005 FR 0508651
(71) Demandeur: STMicroelectronics S.A., 92120 Montrouge (FR)
(72) Inventeur: RICHARD, Gilbert, 57070, METZ (FR)
(74) Mandataire: Bouchet, Geneviève

(57) **Abrégé**

L'invention concerne une mémoire cache simple port de type associative par ensemble d'ordre P mémorisant S*P*N mots de données répartis virtuellement dans S ensembles de P blocs de N mots de données de Q bits. La mémoire cache comprend une mémoire de données comprenant N bancs (BANC1, ..., BANCN) dans lesquels sont répartis physiquement les S ensembles de mots de données. Un mot de donnée (DATAi), situé virtuellement dans un bloc BLi d'un ensemble Si, est localisé physiquement dans un banc Bi de la mémoire de données par :
• une adresse (ADDi_BANC) du banc Bi, ladite adresse de banc correspondant à un rang du mot de données recherché dans le bloc BLi,
• une adresse d'ensemble (ADDi_ENSEMBLE) indiquant le début de l'ensemble Si dans le banc Bi, et
• une adresse de bloc (ADDi_BLOC) indiquant un rang du bloc BLi dans l'ensemble Si.

Selon l'invention, un mot d'un banc comprend P mots de données de Q bits ayant des adresses d'ensemble identiques, et la mémoire cache est adaptée pour, au cours d'un unique cycle d'horloge, traiter simultanément une pluralité de requêtes de lecture (REQi, REQj, etc.), et produire une pluralité de mots de données (DATAi, DATAj, etc.) correspondants.

## Description

L'invention concerne, de façon générale, les mémoires caches, et plus précisément les mémoires caches multi bancs entrelacés de type associative par ensemble d'ordre P, mémorisant S*P*N mots de données de Q bits répartis virtuellement en S ensembles de P blocs (ou lignes de cache ou ways en anglais) de N mots de données de Q bits. La mémoire cache comprend une mémoire de données comprenant plusieurs bancs mémoire dans lesquels sont répartis physiquement les S ensembles de mots de données. Chaque banc mémorise une partie de chaque ensemble Si. La mémoire cache est de taille S*P*N*Q bits. La taille d'un ensemble est de P*N*Q bits.

Une mémoire cache est une mémoire à accès rapide, utilisée dans un circuit électronique comme mémoire intermédiaire entre un processeur et une mémoire principale dont l'accès est beaucoup plus long. Une mémoire cache est en général de petite taille, de l'ordre de quelques Koctets à quelques dizaines de Koctets. Elle permet de mémoriser une partie de l'ensemble des informations stockées dans la mémoire principale.
En pratique, quand le processeur demande la lecture d'une information de la mémoire principale, la mémoire cache renvoie l'information demandée si elle la mémorise déjà, ou bien signale que l'information recherchée n'est pas en mémoire cache. Dans ce dernier cas, la mémoire cache adresse ensuite directement la mémoire principale pour obtenir l'information demandée et la transmet au processeur.
Il existe plusieurs types de mémoires caches, notamment les mémoires caches de type associatives par ensemble d'ordre P et, parmi celles-ci, les mémoires multi-bancs simple et les mémoires multi-bancs entrelacés. Les différents types de mémoire se différencient les uns des autres essentiellement par la manière dont les S*P*N mots de données sont répartis physiquement dans les bancs de la mémoire.
Dans une mémoire associative par ensemble d'ordre P, l'adresse virtuelle d'un mot de données est définie à partir de la décomposition de l'ensemble de données sous la forme d'ensembles de blocs de mots de données ; l'adresse virtuelle d'un mot de données DATAi est ainsi indépendante de la répartition physique des données dans la mémoire et comprend :
- une adresse d'ensemble ADDi_ENSEMBLE indiquant le rang de l'ensemble Si dans lequel se trouve le mot DATAi,
- une adresse de bloc ADDi_BLOC indiquant, dans l'ensemble Si, le rang du bloc BLi dans lequel se trouve le mot DATAi,
- une adresse de mot Mi indiquant le rang du mot DATAi dans le bloc BLi de l'ensemble Si.

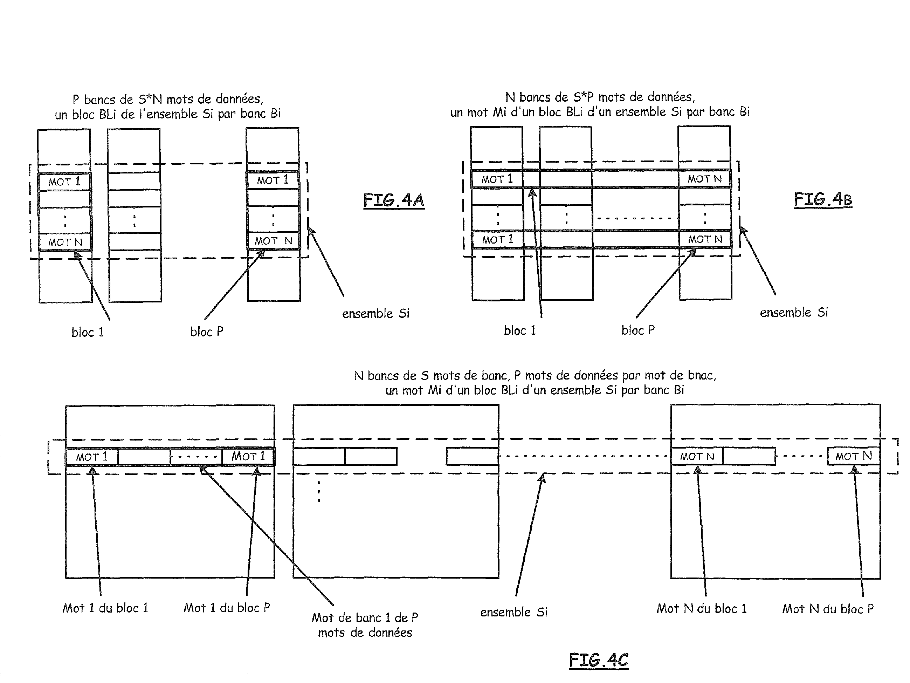

Une mémoire cache associative par ensemble d'ordre P et multi-bancs simple (figure 4a) comprend P bancs et chaque banc comprend S*N lignes de un mot de donnée chacune. Chaque banc mémorise donc S*N mots de données, et plus précisément chaque banc mémorise un bloc (de N mots de données) de chaque ensemble de données et les P blocs de chaque ensemble sont mémorisés dans P bancs différents de la mémoire. En d'autres termes, tous les mots de données ayant une même adresse virtuelle de bloc sont regroupés dans un même banc de la mémoire.
Une mémoire cache associative par ensemble d'ordre P et multi-bancs entrelacés connue (figure 4b) comprend quant à elle N bancs de S*P mots de données chacun et chaque banc mémorise, pour chacun des S ensembles, P mots de données correspondant aux mots de même rang dans les P blocs de données. Un banc mémorise ainsi un mot de chaque bloc de chaque ensemble de données. En d'autres termes, tous les mots ayant une même adresse virtuelle de mot sont regroupés dans un même banc de la mémoire.
Dans une mémoire de données associative par ensemble d'ordre P multi-bancs, l'adresse physique complète d'un mot de donnée DATAi comprend trois adresses partielles :
- une adresse ADDi_BANC du banc Bi, indiquant le banc de la mémoire dans lequel se trouve le mot DATAi
- une adresse de début Di d'ensemble indiquant la ligne (physique) de la mémoire correspondant au début de l'ensemble Si dans le banc Bi, et
- une adresse de décalage Ei indiquant le décalage de ligne par rapport à la ligne correspondant au début de l'ensemble Si dans le banc Bi.

Dans le banc Bi, la ligne Li dans laquelle se trouve le mot DATAi est donc la Ei-i-ème ligne comptée à partir de la Di-ième ligne.
Le lien entre adresses virtuelles et adresses physiques d'un même mot DATAi dépend du type de mémoire, et plus précisément de la répartition physique des mots de données dans la mémoire.
Ainsi, pour le mot DATAi dans une mémoire multi-bancs simple :
- l'adresse physique ADDi_BANC de banc Bi correspond à l'adresse virtuelle ADDi_BLOC du bloc BLi (la mémoire comprend autant de bancs que les ensembles comprennent de blocs)
- l'adresse physique de début Di correspond à l'adresse virtuelle ADDi_ENSEMBLE de l'ensemble Si
- l'adresse physique de décalage Ei correspond à l'adresse virtuelle de mot Mi.
Dans le banc Bi d'une mémoire multi-bancs simples, la ligne Li de la mémoire dans laquelle se trouve le mot DATAi est donc la Mi-ième ligne comptée à partir de la Si-ième ligne.

Pour le même mot DATAi, dans une mémoire multi-bancs entrelacés :
- l'adresse physique ADDi_BANC de banc Bi correspond à l'adresse virtuelle de mot Mi (la mémoire comprend autant de bancs que les blocs comprennent de mots de données)
- l'adresse physique de début Di correspond à l'adresse virtuelle ADDi_ENSEMBLE de l'ensemble Si
- l'adresse physique de décalage Ei correspond à l'adresse virtuelle ADDi_BLOC du bloc BLi.
   Dans le banc Bi d'une mémoire multi-bancs entrelacés, la ligne Li de la mémoire dans laquelle se trouve le mot DATAi est donc la BLi-ième ligne comptée à partir de la Si-ième ligne.

Quelle que soit la mémoire, les trois adresses partielles (au choix, adresses virtuelles ou adresses physiques) sont nécessaires pour obtenir l'adresse complète du mot de donnée recherché, et notamment pour connaître le banc ou la ligne de la mémoire physique dans laquelle se trouve le mot recherché.
Dans le cas d'une mémoire multi-bancs entrelacés, l'adresse de banc ADDi_BANC (correspondant à l'adresse virtuelle de mot) et l'adresse d'ensemble ADDi_ENSEMBLE sont incluses dans une requête de lecture ou d'écriture reçue par la mémoire cache. La mémoire cache comprend également un tableau d'indicateurs, contenant une liste d'indicateurs correspondant aux blocs de mots de données présents dans la mémoire de données et une liste d'adresses de bloc (way) associée.
Dans une requête de lecture, un circuit de décodage extrait l'adresse de banc, l'adresse d'ensemble, et un indicateur. Un circuit de vérification va ensuite déterminer si l'indicateur extrait est présent dans le tableau d'indicateurs (ce qui signifie que le mot de donnée recherché est présent dans la mémoire de données), et produire le cas échéant une adresse de bloc associée. L'adresse de banc, l'adresse de bloc et l'adresse d'ensemble sont ensuite utilisées conjointement par des circuits de sélection et de lecture pour extraire le mot de donnée recherché de la mémoire de données.
Un inconvénient des mémoires caches connues est le fait qu'il n'est pas possible de lire simultanément deux mots de données dans un même cycle horloge. Une solution à ce problème est d'utiliser des bancs de mémoire de type double port d'accès, mais cette solution coûte cher, en terme de surface de silicium et de consommation énergétique, et elle empêche l'utilisation d'horloges à fréquence élevée car les mémoires à double port sont connues pour être plus lentes que les mémoires simple port.
Un objectif principal de l'invention est d'apporter une solution à l'inconvénient des mémoires caches connues, en proposant une mémoire nécessitant un seul cycle d'horloge pour lire simultanément plusieurs mots de données dans la mémoire de données. Ceci permet, selon un premier mode de réalisation, de lire simultanément plusieurs données de taille égale à la taille d'un mot de donnée de la mémoire de données ou, selon un deuxième mode de réalisation, de lire plusieurs données de taille supérieure à la taille d'un mot de donnée de la mémoire de données (c'est-à-dire une données comprenant plusieurs mots consécutifs de données).
L'objectif principal de l'invention est atteint par une mémoire selon l'invention, par ailleurs conforme au préambule ci-dessus, et qui est caractérisée en ce que un mot d'un banc comprend P mots de données de Q bits ayant des adresses d'ensemble identiques, et en ce que elle est adaptée pour, au cours d'un unique cycle d'horloge, traiter simultanément une pluralité de requêtes de lecture et produire une pluralité de mots de données correspondant.
Ainsi, la mémoire de données de la mémoire cache selon l'invention comprend autant de bancs qu'il y a de mots de données dans un bloc d'un ensemble de mots de données (c'est-à-dire N bancs) ; dans chaque banc, on regroupe toutes les données ayant une même adresse virtuelle de mot et plus précisément, dans chaque mot d'un banc, on regroupe tous les mots de données d'un même ensemble, appartenant à des blocs différents mais ayant un même rang dans un bloc (c'est-à-dire tous les mots de données ayant une même adresse d'ensemble, une même adresse de mot, mais des adresses de bloc différentes).
Il suffit donc de connaître l'adresse de mot et l'adresse d'ensemble pour connaître le banc et la ligne dans lesquels se trouve un mot recherché pour accéder à la mémoire. L'adresse de bloc n'est donc pas nécessaire pour accéder à la mémoire de données.
L'accès à la mémoire de données pour lire un mot de banc peut donc se faire en même temps (c'est-à-dire pendant le même cycle d'horloge) que la recherche de l'adresse de bloc.
La mémoire cache comprend également :
- un décodeur, pour extraire une adresse de banc (ADDi_BANC), une adresse d'ensemble (ADDi_ENSEMBLE) et un indicateur (VALi_TAG) d'une requête de lecture (REQLi) d'un mot de donnée (DATAi), et
- un tableau d'indicateurs (TAG) dans lequel sont mémorisées une liste d'indicateurs (VALi_TAG) et une liste d'adresses de bloc associées (ADDi_BLOC), chaque indicateur (VALi_TAG) correspondant à un bloc de mots de données présents en mémoire de données ;
- un circuit de vérification pour vérifier que l'indicateur (VALi_TAG) extrait est présent dans le tableau d'indicateurs (TAG) et produire une adresse de bloc associée (ADDi_BLOC).
   La mémoire cache est avantageusement complétée par :

- un moyen pour sélectionner et lire un mot de banc (MOTi) à l'adresse d'ensemble (ADDi_ENSEMBLE) dans le banc Bi, et
- un moyen pour extraire du mot de banc lu (MOTi) le mot de donnée (DATAi) recherché en fonction de l'adresse de bloc (ADDi_BLOC).
   On va ainsi lire un mot de banc dans la mémoire, puis en extraire le mot de donné recherché. Le moyen pour extraire le mot de donnée recherché du mot de banc lu est de préférence un circuit de sélection tel qu'un circuit de multiplexage, susceptible de produire immédiatement un mot de donnée parmi P mots de données reçus. Ainsi, aucun cycle d'horloge n'est nécessaire pour réaliser cette extraction.
   Comme l'adresse de bloc n'est pas nécessaire pour accéder à la mémoire et lire un mot de banc, il s'ensuit que le tableau d'indicateurs et la mémoire de données peuvent être accédés simultanément, et non plus l'un après l'autre comme dans les mémoires connues. Aussi, de préférence, dans une mémoire selon l'invention, la vérification dans le tableau d'indicateurs TAG, la lecture du mot de banc MOTi et l'extraction du mot de donnée recherché DATAi sont réalisées au cours d'un même cycle d'une horloge cadençant le fonctionnement de la mémoire cache.

Selon un premier mode de réalisation de l'invention, la mémoire est adaptée pour, au cours d'un unique cycle d'horloge, traiter simultanément plusieurs requêtes de lecture ADDi, ADDj, etc., et produire une pluralité de mots de données DATAi, DATAj, etc. correspondants. Les requêtes peuvent émaner d'une ou plusieurs unités d'un circuit électronique dans lequel la mémoire est utilisée.

Selon un deuxième mode de réalisation, la mémoire est adaptée pour, au cours d'un unique cycle d'horloge, traiter une requête de lecture ADDi, et produire une donnée DATA recherchée comprenant une pluralité de mots de données DATAi, DATAi+1, etc. de Q bits. Ce mode de réalisation permet de lire dans la mémoire des données longues, comprenant plusieurs mots de données de Q bits. Les deux modes de réalisation peuvent être cumulés.

D'autres caractéristiques et avantages de l'invention ressortiront clairement de la description qui en est faite ci-après, à titre indicatif et nullement limitatif, en référence aux figures suivantes :
- la figure 1 est un schéma bloc d'une mémoire selon l'invention,
- la figure 2 est un schéma bloc d'un premier mode de réalisation d'une mémoire selon l'invention,
- la figure 3 est un schéma bloc d'un deuxième mode de réalisation d'une mémoire selon l'invention, et
- les figures 4a, 4b, 4c montrent la répartition des mots de données dans les bancs d'une mémoire multi-bancs.
   Comme annoncé précédemment, l'invention concerne une mémoire cache de type associative par ensemble d'ordre P pour mémoriser des mots de données répartis virtuellement dans la mémoire en S ensembles de P blocs (ou lignes de cache ou ways en anglais) de N mots de données de Q bits.
   L'adresse virtuelle complète d'un mot de données DATAi comprend, comme dans les mémoires antérieures :

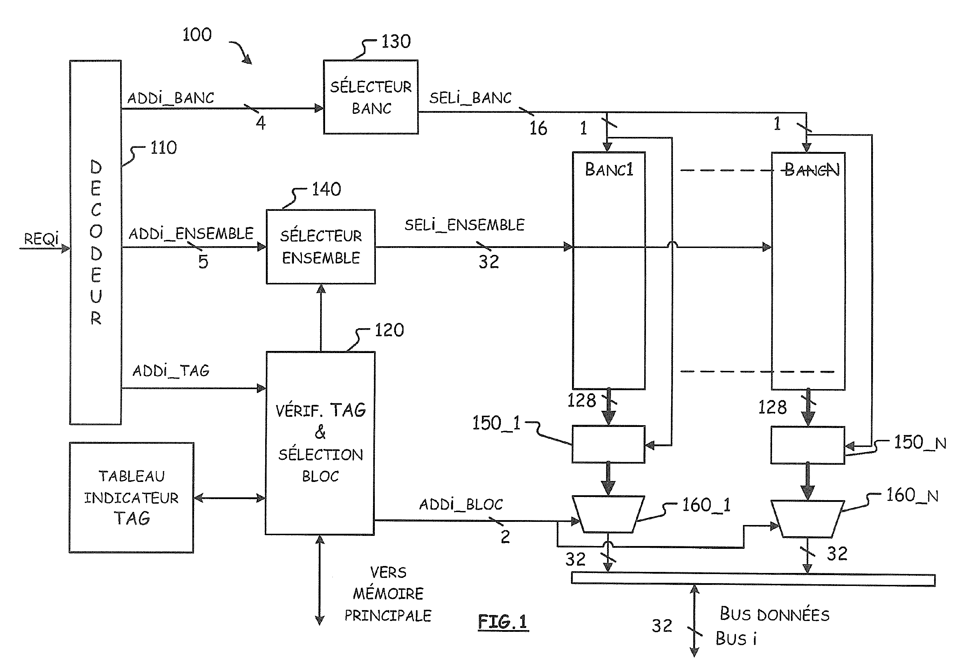

- une adresse d'ensemble ADDi_ENSEMBLE, indiquant l'ensemble Si dans lequel se trouve le mot DATAi
- une adresse de bloc ADDI_BLOC indiquant, dans l'ensemble Si, le rang du bloc BLi dans lequel se trouve le mot DATAi,
- une adresse de mot Mi indiquant, dans le bloc BLi de l'ensemble Si, le rang du mot DATAi.
   La mémoire cache comprend notamment (figures 1, 4c), de même qu'une mémoire connue, une mémoire de données de N bancs BANC1, ..., BANCN dans lesquels sont répartis les S ensembles de P blocs de N mots de données.
   Selon l'invention, la répartition physique des mots de données est réalisée de la manière suivante (figure 4c) :

- tous les mots ayant une même adresse de mot Mi sont regroupés dans un même banc,
- chaque banc comprend S mots de banc, et chaque mot de banc comprend P mots de données de Q bits
- dans chaque mot de banc, on mémorise tous les mots de données ayant une même adresse de mot et une même adresse de bloc, soit P mots de données.
   Dans un exemple concret, on considère une mémoire cache de 64 kbits associative d'ordre P = 4, mémorisant S = 32 ensembles de 4 blocs de N = 16 mots de Q = 32 bits chacun. Les 32 ensembles sont répartis physiquement dans les 16 bancs mémoires comprenant chacun 32 (= S) mots de banc de 128 bits (= P*Q). L'adresse de banc est de 4 bits (pour adresser 2⁴ = 16 bancs), et l'adresse d'ensemble est de 5 bits (pour adresser 2⁵ = 32 ensembles).
   Un mot de donnée DATAi du bloc BLi, de l'ensemble Si, est localisé dans la mémoire par :

- une adresse ADDi_BANC du banc Bi dans lequel se trouve le mot DATAi, l'adresse physique de banc ADDi_BANC correspond à l'adresse virtuelle de mot Mi,
- une adresse de ligne indiquant, dans le banc Bi, la ligne dans laquelle se trouve le mot DATAi ; l'adresse physique de ligne correspond dans l'invention à l'adresse virtuelle d'ensemble ADDi_ENSEMBLE car tous les mots d'un même ensemble sont mémorisés physiquement dans la même ligne de la mémoire de données, et
- une adresse de rang (ou de décalage) indiquant, dans le mot de banc d'adresse ADDi_BANC et ADDi_ENSEMBLE, le rang du mot de données DATAi ; l'adresse physique de rang correspond dans l'invention à l'adresse virtuelle de bloc ADDi_BLOC.

Selon l'invention, dans la mémoire de mots de données, un mot d'un banc comprend P mots de données de Q bits ayant des adresses d'ensemble identiques, et bien sûr des adresses de banc (correspondant aux adresses virtuelles de mots) identiques.
Cette répartition originale des ensembles associe en quelque sorte les P mots (de même adresse d'ensemble et de même adresse de mot) sous la forme de P colonnes dans un même banc, de sorte qu'un banc comprend S mots de banc et qu'un mot de banc de taille P*Q bits comprend P mots de données de Q bits (figure 4c). Ainsi, dans l'exemple d'une mémoire cache de 64kbits, un banc comprend 32 mots de banc de 128 bits chacun et un bloc de la mémoire cache est répartie sur tous les bancs de la mémoire de données. Au contraire, dans une mémoire cache connue (figure 4a ou 4b), les blocs sont associés en quelque sorte à la suite l'un de l'autre, de sorte qu'un mot de banc comprend un unique mot de donnée de Q bits. Ainsi, dans l'exemple d'une mémoire de 64 Kbits comprenant 16 bancs, chaque banc comprend 128 mots de 32 bits.
Avec une répartition des données selon l'invention, l'adresse d'un bloc dans un ensemble donné, correspond en pratique au nombre de décalages de Q bits par rapport au début d'un mot de banc. La mémoire selon l'invention comprend par ailleurs :
- un décodeur, pour extraire une adresse de banc ADDi_BANC, une adresse d'ensemble ADDi_ENSEMBLE et un indicateur VALi_TAG d'une requête de lecture REQLi d'un mot de donnée DATAi, et
- un tableau d'indicateurs TAG dans lequel sont mémorisées une liste d'indicateurs VALi_TAG et une liste d'adresses de bloc associées ADDi_BLOC, chaque indicateur VALi_TAG correspondant à un bloc de mots de donnée présent en mémoire de données ;
- un circuit de vérification pour vérifier que l'indicateur VALi_TAG extrait est présent dans le tableau d'indicateurs TAG et produire une adresse de bloc associée ADDi_BLOC.
   La mémoire comprend également :

- un moyen 130, 140, 150_1 à 150_N pour sélectionner et lire un mot de banc MOTi mémorisé à l'adresse d'ensemble ADDi_ENSEMBLE dans le banc Bi d'adresse ADDi_BANC, et
- un moyen 160_1 à 160_N pour extraire du mot de banc lu MOTi le mot de donnée DATAi recherché en fonction de l'adresse de bloc ADDi_BLOC.

Le moyen de sélection et de lecture est adapté pour lire un mot de banc MOTi de taille P*Q. Il comprend dans l'exemple de la figure 1 un sélecteur de banc 130, un sélecteur d'ensemble 140 et N amplificateurs de lecture 150_1 à 150_N.
Le sélecteur de banc 130 a pour fonction, à partir de l'adresse ADDi_BANC de b bits (dans l'exemple 4 bits) fournie par le décodeur 110, de produire un mot SELi_BANC de taille 2^{b} bits comprenant un unique bit actif correspondant au banc Bi à sélectionner, les 2^{b}-1 bits restant étant inactifs. Les bits du mot SELi_BANC sont ensuite appliqués un à un sur des entrées de sélection des N = 2^{b} bancs de la mémoire, de sorte à sélectionner le banc Bi de rang i parmi les 2^{b} bancs. Le sélecteur de banc est réalisé selon un schéma connu. Le sélecteur d'ensemble 140 est réalisé de manière similaire. A partir de l'adresse d'ensemble ADDi_ENSEMBLE, il produit un mot SELi_ENSEMBLE (dans l'exemple de 32 bits) dont un seul bit est actif. Chaque bit du dit mot SELi_ENSEMBLE est ensuite appliqué sur une entrée de sélection de chaque ligne de chaque banc de la mémoire pour permettre la sélection de l'ensemble Si dans les bancs (on rappelle qu'un ensemble virtuel Si est mémorisé physiquement dans une seule ligne de la mémoire de données). Les amplificateurs de lecture 150_1 à 150_N sont également réalisés selon des schémas connus. Chaque amplificateur est adapté pour lire un mot de banc sélectionné de P*Q bits. Les amplificateurs sont activés ou désactivés selon le cas par un bit du signal SELi_BANC, de même que le banc correspondant.
Le moyen d'extraction comprend quant à lui N multiplexeurs 160_1 à 160_N, ayant chacun une entrée de donnée connecté à une sortie d'un amplificateur 150_1 à 150_N. Chaque multiplexeur 160_1 à 160_N a pour fonction, lorsqu'il reçoit un mot de banc lu de P*Q bits en provenance de l'amplificateur 150_1 à 150_N de lecture associé, d'extraire du dit mot de banc, un mot de donnée DATAi de Q bits d'adresse relative ADDi_BLOC à l'intérieur du mot de banc. Le mot DATAi de Q bits extrait est transféré sur un bus de données de sortie BUSi.
La répartition originale selon l'invention est avantageuse dans la mesure où il n'est pas nécessaire d'accéder au tableau indicateur pour déterminer l'adresse physique de ligne (correspondant à l'adresse virtuelle d'ensemble) avant d'accéder à la mémoire de données.
Aussi, de préférence, on prévoira d'accéder au tableau d'indicateurs et à la mémoire de données simultanément. Puis on extraira du mot de banc lu dans la mémoire de mots de donnée un mot de donnée recherché sélectionné à partir d'une information lue dans le tableau d'indicateurs.

Dans un premier mode de réalisation de l'invention, la mémoire de la figure 1 est adaptée pour, au cours d'un unique cycle d'horloge, traiter simultanément plusieurs requêtes de lecture REQi, REQj, etc., et produire une pluralité de mots de données DATAi, DATAj, etc. correspondants.

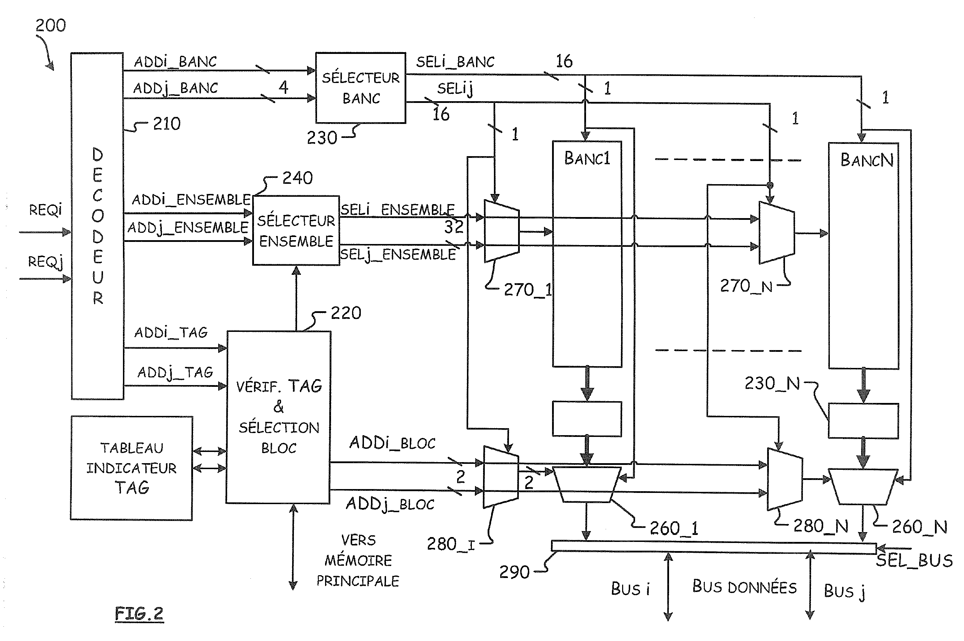

Sur la figure 2, par souci de clarté, on a représenté une telle mémoire susceptible de lire seulement deux mots de données DATAi, DATAj simultanément. Naturellement, il est possible de réaliser une mémoire susceptible de fournir plus de deux mots de données en se basant sur les mêmes principes.
La mémoire représentée sur la figure 2 se distingue de la mémoire de la figure 1 par les points suivants.
Le décodeur 210 est adapté pour simultanément extraire des requêtes de lecture de la pluralité de requêtes de lecture REQi, REQj, etc. respectivement une pluralité d'adresses de banc ADDi_BANC, ADDj_BANC, etc., une pluralité d'adresses d'ensemble ADDi_ENSEMBLE, ADDj_ENSEMBLE, etc., et une pluralité d'indicateurs ADDi_TAG, ADDj_TAG, etc..
A chaque requête de lecture correspond naturellement une adresse de banc, une adresse d'ensemble et un indicateur associés.
Le tableau d'indicateurs est prévu quant à lui avec une pluralité d'accès (dans l'exemple 2 accès) et le moyen de vérification 220 est adapté pour :
- vérifier que la pluralité d'indicateurs extraits ADDi_TAG, ADDj_TAG, etc., est présente dans le tableau d'indicateurs (ce qui signifie que la pluralité de mots de données DATAi, DATAj, etc., est présente dans la mémoire de donnée), et
- produire respectivement une pluralité d'adresses de bloc ADDi_BLOC, ADDj_BLOC, etc. associée à la pluralité d'indicateurs ADDi_TAG, ADDj_TAG, etc..
   Le circuit de sélection et de lecture est adapté pour, si les adresses de banc de la pluralité d'adresses de banc ADDi_BANC, ADDj_BANC, etc. sont différentes l'une de l'autre, simultanément sélectionner et lire une pluralité de mots de banc MOTi, MOTj, etc., chacun mémorisé dans une ligne et dans un banc correspondant à respectivement à une adresse d'ensemble et à une adresse de banc associées. Le circuit de sélection donne la priorité d'accès dans l'ordre croissant des indices i,j par exemple, si les adresses de banc de la pluralité d'adresses de banc ADDi_BANC, ADDj_BANC, sont identiques. Dans l'exemple de la figure 2, le circuit de sélection et de lecture comprend, de même que le circuit de même fonction de la figure 1, un sélecteur de banc 230, un sélecteur d'ensemble 240, N multiplexeurs 270_1 à 270_N et et N amplificateurs de lecture 250_1 à 250_N. Le sélecteur de banc 230 est assez similaire au sélecteur 130. A partir de deux adresses de bancs ADDi_BANC et ADDj_BANC de b bits, il produit un mot SELi_BANC de 2^{b} bits dont seulement deux bits sont actifs, l'un correspondant à l'adresse ADDi_BANC et l'autre correspondant à l'adresse ADDj_BANC. Chaque bit du mot SELi_BANC est appliqué comme précédemment sur une entrée de sélection des bancs de la mémoire. Le sélecteur 230 produit également un signal SELij de N bits comprenant un unique bit actif associé à ADDi_BANC. Dans le cas de conflit où les bits de sélection de banc sont identiques, les accès au banc correspondant s'effectue en deux cycles d'horloge. Le premier cycle étant utilisé pour produire le mot d'adresse ADDi_BANC, le second cycle pour produire le mot d'adresse ADDj_BANC.
   Le sélecteur d'ensemble 240 est assez similaire au sélecteur 140. A partir de chaque adresse d'ensemble ADDi_ENSEMBLE respectivement ADDj_ENSEMBLE, il produit un mot de S bits (S étant le nombre d'ensembles) SELi_ENSEMBLE, respectivement SELj_ENSEMBLE. Ces deux mots sont appliqués sur deux entrées de données de chaque multiplexeur 270_1 à 270_N. Chaque multiplexeur comprend également une entrée de sélection, sur laquelle est appliqué un bit du signal SELij, et une sortie connectée à l'entrée de sélection d'un banc de même rang. Les multiplexeurs 270_1 à 270_N ont pour fonction d'appliquer
- SELi_ENSEMBLE sur l'entrée de sélection de ligne du banc associé à l'adresse ADDi_BANC,
- SELj_ENSEMBLE sur l'entrée de sélection de tous les autres bancs de la mémoire.
   Ensemble, les sélecteurs 230, 240 et les multiplexeurs 270_1 à 270_N ont ainsi pour fonction de sélectionner simultanément deux mots de banc dans des bancs différents.
   Les amplificateurs 250_1 à 250_N sont identiques aux amplificateurs 150_1 à 150_N. Chacun reçoit sur une entrée de sélection un bit du mot SELi_BANC. Deux amplificateurs de lecture sont ainsi sélectionnés en même temps que les deux bancs correspondant. Ceci permet de lire simultanément deux mots de banc dans des bancs différents.

Enfin, le moyen d'extraction est quant à lui adapté pour extraire de la pluralité de mots de banc une pluralité de mots de données DATAi, DATAj, etc. en fonction de la pluralité d'adresses de bloc ADDi_BLOC, ADDj_BLOC, etc., et produire la pluralité de mots de données DATAi, DATAj, etc..
Pour cela, le moyen d'extraction comprend, dans l'exemple de la figure 2, N multiplexeurs 260_1 à 260_N, et N multiplexeurs 280_1 à 280_N.
Les N multiplexeurs 280_1 à 280_N comprennent chacun deux entrées de données sur lesquelles sont appliquées les adresses ADDi_BLOC et ADDj_BLOC, une entrée de sélection sur laquelle est appliqué un bit de rang correspondant du signal SELij, et une sortie de donnée connectée à l'entrée de sélection d'un multiplexeur correspondant 280_1 à 280_N. Les multiplexeurs 280_1 à 280_N appliquent ainsi, sur l'entrée de sélection des multiplexeurs 260_1 à 260_N, soit l'adresse ADDi_BLOC, soit l'adresse ADDj_BLOC, en fonction d'un bit du signal SELij.
Chacun des N multiplexeurs 260_1 à 260_N a une entrée de donnée de P*Q bits connectée à la sortie d'un amplificateur 250_1 à 250_N associé.
Chaque multiplexeur 260_1 à 260_N a pour fonction, lorsqu'il reçoit un mot de banc MOTi, MOTj de P*Q bits en provenance de l'amplificateur de lecture associé, d'extraire du dit mot reçu, un mot de donnée DATAi, DATAj de Q bits d'adresse relative à l'intérieur du mot de banc MOTi, MOTj l'adresse ADDi_BLOC ou ADDj_BLOC que le multiplexeur reçoit sur son entrée de sélection.

Les multiplexeurs 260_1 à 260_N et 280_1 à 280_N permettent ainsi ensemble d'extraire des deux mots de banc lus MOTi et MOTj simultanément deux mots de donnée DATAi et DATAj.
Les deux mots de Q bits extraits sont ensuite transférés sur des bus BUSi, BUSj de données de sortie de Q bits, par l'intermédiaire d'un sélecteur de bus 290. Dans une variante, les mots de donnée peuvent être sortis en parallèle sur un bus de taille approprié (soit 2*Q bits dans l'exemple de la figure 2).

Dans un deuxième mode de réalisation, la mémoire selon l'invention est adaptée pour, au cours d'un unique cycle d'horloge, traiter une requête de lecture ADDi, et produire une donnée DATA recherchée comprenant une pluralité de mots DATAi, DATAi+1, etc. de Q bits.
Ceci permet de lire dans la mémoire des données longues, comprenant plusieurs mots de donnée de Q bits. Dans l'exemple décrit ci-dessous, on suppose que les mots d'une donnée DATA recherchée de longueur xi*Q bits (soit xi mots de Q bits) sont mémorisés sur la même ligne de la mémoire de données, c'est-à-dire dans le même ensemble, et dans xi bancs successifs de la mémoire de donnée. Ainsi, dans l'exemple d'une donnée recherchée de 2*Q bits, le premier mot DATAi peut être localisé par les informations ADDi_BANC, ADDi_BLOC, ADDi_ENSEMBLE, et le deuxième mot peut être localisé par les informations ADDi+l_BANC, ADDi_BLOC, ADDi_ENSEMBLE.

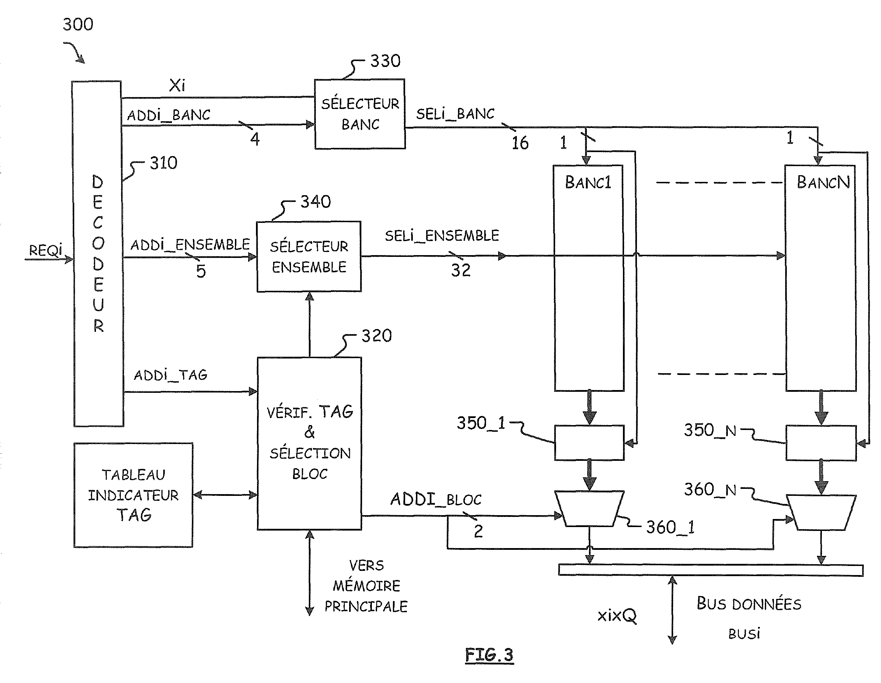

Sur la figure 3, par souci de clarté, on a représenté une mémoire selon le deuxième mode de réalisation, susceptible de lire en un seul cycle d'horloge une donnée DATA comprenant seulement deux mots de données DATAi, DATAj. Naturellement, il est possible de réaliser une mémoire susceptible de fournir plus de deux mots de données en se basant sur les mêmes idées.
La mémoire représentée sur la figure 3 se distingue de la mémoire représentée sur la figure 1 par les points suivants.
Le décodeur 310 est adapté pour extraire de la requête de lecture REQi une adresse de banc ADDi_BANC, une adresse d'ensemble ADDi_ENSEMBLE, un indicateur VALi_TAG, et une longueur de donnée xi.
Le circuit de vérification est quant à lui inchangé puisque les mots DATAi, DATAi+1, ..., DATAi+xi-1 de données de la donnée DATA recherchée correspondant à l'indicateur VALi_TAG, sont contenus dans le même bloc d'adresse ADDi_BLOC.
Le circuit de sélection et de lecture est quant à lui adapté pour sélectionner et lire simultanément une pluralité de mots de banc MOTi, MOTi+1, ..., MOTi+xi-1, un mot de banc étant lu dans un nombre de bancs correspondant à la longueur xi de la donnée, les dits mots de banc étant mémorisés dans la mémoire à la même adresse d'ensemble ADDi_ENSEMBLE, et respectivement dans des bancs successifs BANCi, BANCi+1, ..., BANCi+xi-1 à compter du banc correspondant à l'adresse de banc ADDi_BANC. On va ainsi sélectionner et lire dans les bancs successifs de rang i, i+1, ..., i+xi-1, les mots de banc contenant les mots de la donnée recherchée.
Le circuit de sélection et de lecture comprend un sélecteur de banc 330, un sélecteur d'ensemble 340, et N amplificateurs de lecture 350_1 à 350_N.
Le circuit 330 est un peu différent du circuit similaire 130 de la figure 1. A partir de l'adresse ADDi_BANC de b bits, le circuit 330 fournit un mot de taille 2b, dont le bit de rang i et les xi bits suivants sont actifs, les autres bits étant inactifs.
Le sélecteur 340 et les amplificateurs 350_1 à 350_N sont similaires aux circuits de même fonction 140 et 150_1 à 150_N de la figure 1.
Les sélecteurs 330 et 340 vont ainsi permettre ensemble de sélectionner xi mots de banc, sur une même ligne physique (ie dans un même ensemble virtuel) mais dans des bancs successifs de la mémoire de données.

Enfin, le moyen d'extraction est adapté pour extraire de la pluralité de mots de banc lus la pluralité de mots de données DATAi, DATAi+1, ..., DATAi+xi-1 de la donnée DATA recherchée en fonction de l'adresse de bloc ADDi_BLOC, un mot de donnée étant extrait de chaque mot de banc lu MOTi, MOTi+1, ..., MOTi+xi-1, et produire la pluralité de mots de la donnée DATAi, DATAi+1, ..., DATAi+xi-1 en parallèle sur un bus de données.

Bien sûr, l'invention n'est pas limitée aux deux modes de réalisation décrits en relation avec les figures annexées.
Les deux modes de réalisation décrits peuvent être combinés. Par exemple, on peut prévoir une mémoire susceptible de fournir en un unique cycle d'horloge une donnée longue de xi mots de Q bits, et une donnée comprenant seulement un mot de Q bits. Pour cela, on adaptera en conséquence le circuit de sélection d'ensemble, le moyen de sélection et de lecture pour accéder aux xi+1 mots de données recherchés, et on prévoira par exemple un bus de taille xi*Q bits et un bus de taille Q bits pour sortir les données.

Une mémoire selon l'invention est également complétée par des moyens d'écriture dans la mémoire de données. On prévoira de préférence des moyens permettant de remplir la mémoire ligne par ligne, ou à défaut mot à mot.
Une mémoire selon l'invention peut être également avantageusement complétée par des moyens connus de gestion des priorités, permettant de gérer deux demandes d'accès simultané à un même banc de la mémoire, en lecture ou en écriture.

## Revendications

1. Mémoire cache simple port de type associative par ensemble d'ordre P mémorisant S*P*N mots de données répartis virtuellement dans S ensembles de P blocs de N mots de données de Q bits, la mémoire cache comprenant une mémoire de données comprenant N bancs (BANC1, ..., BANCN) dans lesquels sont répartis physiquement les S ensembles de mots de données, un mot de donnée recherché (DATAi), situé virtuellement dans un bloc BLi d'un ensemble Si, étant localisé physiquement dans un banc Bi de la mémoire de données par :
• une adresse (ADDi_BANC) du banc Bi, ladite adresse de banc correspondant à un rang du mot de données recherché dans le bloc BLi,
• une adresse d'ensemble (ADDi_ENSEMBLE) indiquant le début de l'ensemble Si dans le banc Bi, et
• une adresse de bloc (ADDi_BLOC) indiquant un rang du bloc BLi dans l'ensemble Si,
la mémoire cache étant **caractérisée en ce que** un mot d'un banc comprend P mots de données de Q bits ayant des adresses d'ensemble identiques, et **en ce qu'**elle est adaptée pour, au cours d'un unique cycle d'horloge, traiter simultanément une pluralité de requêtes de lecture (REQi, REQj, etc.), et produire une pluralité de mots de données (DATAi, DATAj, etc.) correspondants.

2. Mémoire cache selon la revendication 1, comprenant également :
• un décodeur, pour extraire une adresse de banc (ADDi_BANC), une adresse d'ensemble (ADDi_ENSEMBLE) et un indicateur (VALi_TAG) d'une requête de lecture (REQLi) d'un mot de donnée (DATAi), et
• un tableau d'indicateurs (TAG) dans lequel sont mémorisées une liste d'indicateurs (VALi_TAG) et une liste d'adresses de bloc associées (ADDi_BLOC), chaque indicateur (VALi_TAG) correspondant à un bloc de mots de donnée présent en mémoire de données ;
• un circuit de vérification pour vérifier que l'indicateur (VALi_TAG) extrait est présent dans le tableau d'indicateurs (TAG) et produire une adresse de bloc associée (ADDi_BLOC),
la mémoire cache comprenant également :
• un moyen pour sélectionner et lire un mot de banc (MOTi) à l'adresse d'ensemble (ADDi_ENSEMBLE) dans le banc Bi, et
• un moyen pour extraire du mot de banc lu (MOTi) le mot de donnée (DATAi) recherché en fonction de l'adresse de bloc (ADDi_BLOC).

3. Mémoire selon la revendication 1 ou 2, dans laquelle la vérification dans le tableau d'indicateurs (TAG), la lecture du mot de banc (MOTi) et l'extraction du mot de donnée recherché (DATAi) sont réalisées au cours d'un même cycle d'une horloge cadençant le fonctionnement de la mémoire cache.

4. Mémoire selon l'une des revendications 1 à 3, dans laquelle le décodeur est adapté pour simultanément extraire de la pluralité de requêtes de lecture (REQi, REQj, etc.) respectivement une pluralité d'adresses de banc (ADDi_BANC, ADDj_BANC, etc.), une pluralité d'adresses d'ensemble (ADDi_ENSEMBLE, ADDj_ENSEMBLE, etc.), et une pluralité d'indicateurs (ADDi_TAG, ADDj_TAG, etc.).

5. Mémoire selon la revendication précédente, dans laquelle le circuit de vérification est adapté pour vérifier que la pluralité d'indicateurs extraits (ADDi_TAG, ADDj_TAG, etc.) est présente dans le tableau d'indicateurs, et produire respectivement une pluralité d'adresses de bloc (ADDi_BLOC, ADDj_BLOC, etc.) associée.

6. Mémoire selon la revendication précédente,
• dans laquelle le circuit de sélection et de lecture est adapté pour, si les adresses de banc de la pluralité d'adresses de banc (ADDi_BANC, ADDj_BANC, etc.) sont différentes l'une de l'autre, simultanément sélectionner et lire une pluralité de mots de banc (MOTi, MOTj, etc.), chacun mémorisé dans un ensemble et dans un banc correspondant à une adresse d'ensemble et à une adresse de banc associées, et
• dans laquelle le moyen d'extraction est adapté pour extraire de la pluralité de mots de banc une pluralité de mots de données (DATAi, DATAj, etc.) en fonction de la pluralité d'adresses de bloc (ADDi_BLOC, ADDj_BLOC, etc.), et produire la pluralité de mots de données (DATAi, DATAj, etc.).

7. Mémoire selon l'une des revendications précédentes, adaptée pour, au cours d'un unique cycle d'horloge, traiter une requête de lecture (REQi), et produire une donnée (DATA) recherchée comprenant une pluralité de mots (DATAi, DATAi+1, etc.) de Q bits.

8. Mémoire selon la revendication précédente, dans laquelle le décodeur est adapté pour extraire de la requête de lecture (REQi) une adresse de banc (ADDi_BANC), une adresse d'ensemble (ADDi_ENSEMBLE), un indicateur (VALi_TAG), et une longueur de donnée xi.

9. Mémoire selon la revendication précédente, dans laquelle le circuit de vérification est adapté pour vérifier que l'indicateur (ADDi_TAG) extrait est présent dans le tableau d'indicateurs et produire respectivement une adresse de bloc (ADDi_BLOC) associée.

10. Mémoire selon la revendication précédente,
• dans laquelle le circuit de sélection et de lecture est adapté pour sélectionner et lire simultanément une pluralité de mots de banc (MOTi, MOTi+1, ..., MOTi+xi-1) à la même adresse d'ensemble (ADDi_ENSEMBLE), un mot de banc étant lu dans xi bancs successifs (BANCi, BANCi+1, ..., BANCi+xi-1) à compter du banc correspondant à l'adresse de banc (ADDi_BANC) extraite, les xi mots de banc lus étant mémorisés à la même adresse d'ensemble (ADDi_ENSEMBLE), et
• dans laquelle le moyen d'extraction est adapté pour extraire de la pluralité de mots de banc lus la pluralité de mots de données (DATAi, DATAi+1, ..., DATAi+xi-1) de la donnée (DATA) recherchée, un mot de donnée étant extrait de chaque mot de banc lu (MOTi, MOTi+1, ..., MOTi+xi-1), et produire la pluralité de mots de la donnée (DATAi, DATAi+1, ..., DATAi+xi-1) en parallèle sur un bus de données.
